# FASCICULE DE BREVET EUROPEEN

(11) **EP 3 348 321 B1**
(45) Date de publication et mention de la délivrance du brevet: **28.07.2021**
(21) Numéro de dépôt: 18150754.2
(22) Date de dépôt: 09.01.2018
(51) Int. Cl.: B01D 46/00, B01D 46/30

(54) **FILTRE ANTI-ODEUR POUR DES TOILETTES, NOTAMMENT DE VÉHICULE DE TRANSPORT PUBLIC**
GERUCHSFILTER FÜR TOILETTEN, INSBESONDERE IN ÖFFENTLICHEN VERKEHRSMITTELN
AN ODOR ABSORBER FILTER FOR A PUBLIC RESTROOM, IN PARTICULAR OF A PUBLIC TRANSPORT VEHICLE

(30) Priorité: 16.01.2017 FR 1750317
(43) Date de publication de la demande: 18.07.2018
(73) Titulaire: ALSTOM Transport Technologies, 93400 Saint-Ouen (FR); SNCF Mobilités, 93200 Saint-Denis (FR)
(72) Inventeur: GRUSSENMEYER, Pierre, 67580 LAUBACH (FR); GAUCHET, Jean-Pierre, 67118 GEISPOLSHEIM (FR)
(74) Mandataire: Lavoix

(56) Documents cités:
- EP-A1- 0 841 085
- WO-A2-2005/000745
- FR-A- 877 536
- FR-A1- 2 348 732

## Description

La présente invention concerne un filtre anti-odeur pour des toilettes, notamment de véhicule de transport public, et plus particulièrement pour un véhicule ferroviaire.

Des exemples de filtres, qui ne sont pas des filtres anti-odeur, sont décrits dans WO 2005/000745, FR 877 536, FR 2 348 732 ou EP 0 841 085.

On connait déjà, dans l'état de la technique, un filtre anti-odeur pour toilettes, notamment de véhicule de transport public, comportant un contenant cylindrique s'étendant longitudinalement le long d'un axe longitudinal entre des première et seconde bases, et radialement entre une paroi circonférentielle intérieure percée et une paroi circonférentielle extérieure percée, le contenant cylindrique étant rempli de matériau actif.

L'air à purifier est apporté dans l'espace intérieur délimité par la paroi circonférentielle intérieure, passe à travers les perforations de cette paroi circonférentielle intérieure, puis passe radialement à travers le matériau actif pour être purifié avant de ressortir à travers les perforations de la paroi circonférentielle extérieure.

Le matériau actif se détériore au cours du temps et des utilisations, si bien que le filtre perd en efficacité au cours du temps. Il est donc nécessaire de changer régulièrement ce filtre.

A cet effet, le filtre de l'état de la technique est entièrement remplacé, ce qui implique des coûts importants.

L'invention a notamment pour but d'améliorer la situation, en proposant un filtre plus économique.

A cet effet, l'invention a notamment pour objet un filtre anti-odeur pour toilettes, notamment de véhicule de transport public, comportant un contenant cylindrique s'étendant longitudinalement le long d'un axe longitudinal entre des première et seconde bases, et radialement entre une paroi circonférentielle intérieure percée et une paroi circonférentielle extérieure percée, le contenant cylindrique étant rempli de matériau actif, dans lequel moins l'une des première et seconde bases comporte au moins une ouverture autorisant le passage de matériau actif, le filtre comprenant un capuchon amovible d'obturation de l'ouverture, caractérisé en ce que, l'ouverture (26) étant allongée le long d'un arc de cercle défini autour de l'axe longitudinal (X), cette l'ouverture (26) étant allongée sur une longueur d'arc supérieure à un quart de la circonférence moyenne de la base (14) correspondante et inférieure à un tiers de la circonférence moyenne de la base (14) correspondante.

Après utilisations, lorsque le filtre selon l'invention est usagé, il est possible de remplacer le matériau actif tout en conservant le contenant.

En effet, grâce à ladite ouverture, le matériau actif usagé peut être extrait depuis le contenant, pour être remplacé par un matériau actif neuf, introduit dans le contenant par cette même ouverture.

Il en résulte que la conservation du contenant permet d'économiser son coup lors d'un remplacement de filtre, ce qui entraîne des réductions de coût substantielles.

Un filtre selon l'invention peut comporter en outre l'une ou plusieurs des caractéristiques suivantes, prises seules ou selon toutes combinaisons techniquement envisageables.
- Le capuchon amovible présente une forme générale annulaire dont les dimensions radiales sont sensiblement supérieures ou égales à celles de la première ou seconde base correspondante.
- chacune des première et seconde bases comporte une ouverture autorisant le passage de matériau actif, le filtre comprenant un capuchon amovible d'obturation de chaque ouverture.
- Le capuchon amovible est solidarisé à la base correspondante par vissage.

L'invention concerne également un procédé de rechargement d'un filtre anti-odeur tel que défini précédemment, caractérisé en ce qu'il comporte :
- la libération de l'ouverture par retrait du capuchon amovible,
- le vidage du contenant par passage du matériau actif usagé à travers l'ouverture vers l'extérieur du contenant,
- le remplissage du contenant, par passage de matériau actif de rechargement à travers l'ouverture vers l'intérieur du contenant, et
- la remise en place du capuchon amovible pour l'obturation de l'ouverture.

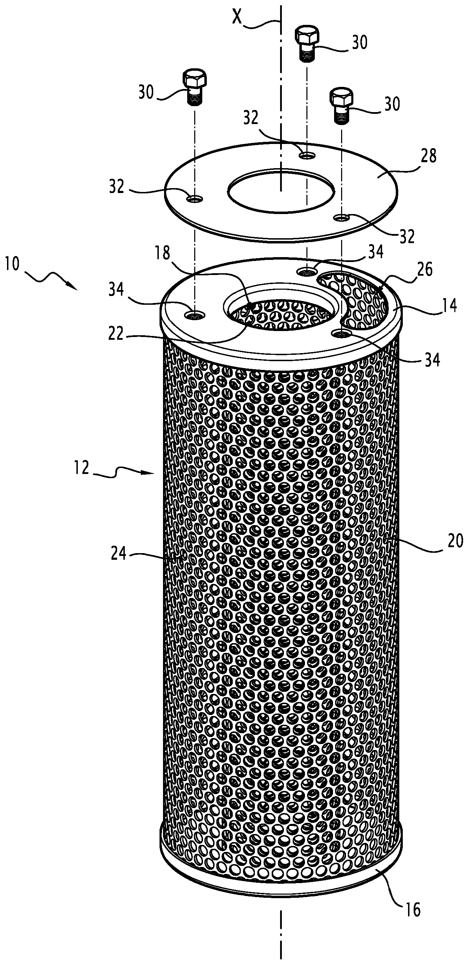

L'invention sera mieux comprise à la lecture de la description qui va suivre, donnée uniquement à titre d'exemple et faite en se référant à la figure annexée représentant un filtre selon un exemple de mode de réalisation de l'invention.

On a représenté sur la figure un filtre 10 anti-odeurs selon un exemple de mode de réalisation de l'invention.

Le filtre 10 est destiné à équiper des toilettes, notamment des toilettes publiques, et plus particulièrement des toilettes de véhicule de transport public. Par exemple, le filtre 10 est destiné à équiper un véhicule ferroviaire.

L'emplacement du filtre 10 dans les toilettes est connu en soi.

Le filtre 10 comporte un contenant cylindrique 12 s'étendant longitudinalement le long d'un axe longitudinal X entre des première 14 et seconde 16 bases.

Dans l'exemple décrit, le contenant 12 est cylindrique à section transversale circulaire, mais il pourrait en variante être cylindrique à section transversale ovale, rectangulaire, ou toute autre forme envisageable.

Le contenant cylindrique 12 présente une forme générale de révolution autour de l'axe longitudinal X. Il s'étend radialement entre une paroi circonférentielle intérieure percée 18 et une paroi circonférentielle extérieure percée 20. Les parois intérieure 18 et extérieure 20 sont par exemple métalliques.

La paroi circonférentielle intérieure 18 s'étend autour de l'axe longitudinal X, et délimite un espace intérieur de passage d'air. La paroi circonférentielle intérieure 18 est percée, par exemple par une multitude de premiers orifices 22 répartis sur toute la surface de cette paroi circonférentielle intérieure 18, et forme ainsi un grillage.

La paroi circonférentielle extérieure 20 s'étend également autour de l'axe longitudinal X, et autour de la paroi circonférentielle intérieure 18. Ainsi, les parois circonférentielles intérieure 18 et extérieure 20 délimitent ensemble un espace interne de stockage. La paroi circonférentielle extérieure 20 est percée, par exemple par une multitude de seconds orifices 24 répartis sur toute la surface de cette paroi circonférentielle extérieure 20, et forme ainsi un grillage.

L'espace interne de stockage est rempli par un matériau actif de filtrage d'odeurs, par exemple par des granules de charbon actif.

Il est à noter que les premiers 22 et seconds 24 orifices présentent des dimensions suffisantes pour autoriser le passage d'air à travers ces orifices 22, 24, mais suffisamment faibles pour interdire le passage de matériau actif. Le matériau actif est donc maintenu dans l'espace interne de stockage malgré les premiers 22 et seconds 24 orifices.

Les première 14 et seconde 16 bases referment l'espace interne de stockage à chaque extrémité du contenant 12, dans la direction de l'axe longitudinal X. Chacune de ces première 14 et seconde 16 bases présente donc une forme générale annulaire, dont les dimensions radiales correspondent sensiblement aux dimensions radiales de l'espace interne de stockage. Les première 14 et seconde 16 bases sont solidarisées aux parois circonférentielles intérieure 18 et extérieure 20, de manière connue en soi.

Au moins l'une des première 14 et seconde 16 bases comporte au moins une ouverture 26, débouchant dans l'espace interne de stockage, et présentant des dimensions suffisantes pour autoriser le passage de matériau actif à travers cette ouverture 26. Dans l'exemple représenté, c'est la première base 14 qui comporte cette ouverture 26. Toutefois, en variante ou de manière additionnelle, la seconde base 16 pourrait comporter également une ouverture de manière tout à fait équivalente.

L'ouverture 26 est allongée le long d'un arc de cercle défini autour de l'axe longitudinal X. Plus particulièrement, l'ouverture 26 présente un bord extérieur s'étendant le long de la paroi extérieure 20, et un bord intérieur s'étendant le long de la paroi intérieure 18, reliés entre eux par des bords latéraux, par exemple arrondis. Ainsi, dans l'exemple représenté, cette ouverture 26 présente sensiblement une forme de haricot.

L'ouverture 26 est allongée sur une longueur d'arc supérieure à un quart de la circonférence moyenne de la première base, c'est-à-dire la circonférence de la première base à égale distance entre le bord intérieur et le bord extérieur.

Cette longueur de l'allongement de l'ouverture 26 permet d'assurer le bon écoulement des granules de charbon actif à travers cette ouverture 26, à la fois pour le vidage et pour le remplissage de l'espace interne de stockage.

Par ailleurs, l'ouverture 26 est allongée sur une longueur d'arc inférieure à un tiers de la circonférence moyenne de la base correspondante 14.

Cette longueur de l'allongement de l'ouverture 26 permet d'assurer la bonne résistance mécanique de la première base 14.

Le filtre 10 comporte par ailleurs un capuchon amovible 28 d'obturation de l'ouverture 26.

Dans l'exemple représenté, le capuchon amovible 28 présente une forme générale annulaire dont les dimensions radiales sont sensiblement supérieures ou égales à celles de la première base 14. Ainsi, le capuchon amovible 28 recouvre la première base 14 lorsqu'il est assemblé à cette première base 14, tout en laissant un accès à l'espace intérieur de passage d'air. Le capuchon amovible 28 permet donc de renforcer la résistance mécanique de la première base 14.

Le capuchon amovible 28, lorsqu'il est assemblé à la première base 14, obture l'ouverture 26 de manière imperméable pour le matériau actif, et de préférence sensiblement imperméable à l'air.

Le capuchon amovible 28 est solidarisé à la base correspondante 14 par tout moyen de solidarisation amovible envisageable, par exemple par vissage au moyen de vis 30, par exemple trois vis 30 réparties autour de l'axe longitudinal X.

Dans ce cas, le capuchon amovible 28 comporte des premiers orifices de vissage 32 pour le passage des vis 30, et la première base 14 comporte des seconds orifices de vissage 34 pour le vissage des vis 30. Chaque premier orifice de vissage 32 est destiné à être disposé en regard d'un second orifice de vissage 34 correspondant. Les seconds orifices de vissage 34 comportent chacun une partie taraudée pour permettre le vissage des vis 30.

On notera que des moyens de solidarisation sont dits amovibles lorsqu'ils permettent une désolidarisation du capuchon 28 et de la base 14 sans détérioration du capuchon 28 ni de la base 14, et de préférence sans détérioration de ces moyens de solidarisation, qui devraient ainsi être réutilisables.

Lorsque le filtre 10 selon l'invention est usagé, il est possible de le recharger au cours d'un procédé de rechargement qui va maintenant être décrit.

Ce procédé comporte la libération de l'ouverture 26 par retrait du capuchon amovible 28. Ce retrait est réalisé en désactivant les moyens de solidarisation amovibles. Dans l'exemple décrit, les vis 30 sont dévissées.

Le procédé comporte ensuite le vidage du contenant 12 par passage du matériau actif usagé à travers l'ouverture 26, vers l'extérieur du contenant 12. En pratique, le contenant 12 est retourné et secoué pour être vidé, vers un réceptacle de récolte de déchet.

Le procédé comporte ensuite le remplissage du contenant 12, par passage de matériau actif de rechargement à travers l'ouverture 26 vers l'intérieur du contenant 12. Les dimensions de l'ouverture 26 sont généralement suffisantes pour faciliter ce remplissage, mais il est possible d'utiliser en outre des moyens formant entonnoir.

Le procédé comporte enfin la remise en place du capuchon amovible 28, pour l'obturation de l'ouverture 26. A cet effet, les moyens de solidarisation amovibles sont réactivés. Dans l'exemple décrit, les vis 30 sont vissées de nouveau dans les orifices de vissage 32, 34 prévus à cet effet.

On notera que l'invention n'est pas limitée au mode de réalisation précédemment décrit, et pourrait présenter diverses variantes.

Par exemple, le capuchon amovible 28 peut être fixé à la première base 14 par tout autre moyen de fixation amovible envisageable.

Par ailleurs, la première base 14 pourrait présenter plus d'une ouverture 26.

Conformément à une autre variante, chacune des première 14 et seconde 16 bases pourrait présenter une ouverture respective. Dans ce cas, ces bases 14, 16 seraient identiques. Une telle configuration permet, par exemple, lorsque le filtre est installé de sorte que l'axe longitudinal X corresponde à un axe vertical, de remplacer le matériau actif dans le filtre sans désinstaller le filtre.

On notera qu'un filtre selon l'invention est particulièrement économique en comparaison avec un filtre de l'état de la technique.

En particulier, un filtre de l'état de la technique implique un coût de maintenance d'environ 110€ par toilettes, tandis qu'un filtre selon l'invention implique un coût de maintenance d'environ 6€ par an pour le remplacement du matériau actif, auquel il faut ajouter, une seule fois, le coût de base du contenant, qui est d'environ 45€.

Il apparait donc clairement que le filtre selon l'invention permet de réaliser des économies substantielles, notamment sur une flotte de véhicules ferroviaires, le long de leur durée de vie qui est généralement de 40 ans.

## Revendications

1. Filtre anti-odeur (10) pour toilettes, notamment de véhicule de transport public, comportant un contenant cylindrique (12) s'étendant longitudinalement le long d'un axe longitudinal (X) entre des première (14) et seconde (16) bases, et radialement entre une paroi circonférentielle intérieure percée (18) et une paroi circonférentielle extérieure percée (20), le contenant cylindrique (12) étant rempli de matériau actif, dans lequel moins l'une des première (14) et seconde (16) bases comporte au moins une ouverture (26) autorisant le passage de matériau actif, le filtre (10) comprenant un capuchon amovible (28) d'obturation de l'ouverture (26), **caractérisé en ce que**, l'ouverture (26) étant allongée le long d'un arc de cercle défini autour de l'axe longitudinal (X), cette l'ouverture (26) est allongée sur une longueur d'arc supérieure à un quart de la circonférence moyenne de la base (14) correspondante et inférieure à un tiers de la circonférence moyenne de la base (14) correspondante.

2. Filtre anti-odeur (10) selon la revendication 1, dans lequel le capuchon amovible (28) présente une forme générale annulaire dont les dimensions radiales sont sensiblement supérieures ou égales à celles de la première (14) ou seconde (16) base correspondante.

3. Filtre anti-odeur (10) selon l'une quelconque des revendications précédentes, dans lequel chacune des première (14) et seconde (16) bases comporte une ouverture (26) autorisant le passage de matériau actif, le filtre (10) comprenant un capuchon amovible (28) d'obturation de chaque ouverture (26).

4. Filtre anti-odeur (10) selon l'une quelconque des revendications précédentes, dans lequel le capuchon amovible (28) est solidarisé à la base correspondante (14) par vissage.

5. Procédé de rechargement d'un filtre anti-odeur (10) selon l'une quelconque des revendications 1 à 4, **caractérisé en ce qu'**il comporte :
- la libération de l'ouverture (26) par retrait du capuchon amovible (28),
- le vidage du contenant (12) par passage du matériau actif usagé à travers l'ouverture (26) vers l'extérieur du contenant (12),
- le remplissage du contenant (12), par passage de matériau actif de rechargement à travers l'ouverture (26) vers l'intérieur du contenant (12), et
- la remise en place du capuchon amovible (28) pour l'obturation de l'ouverture (26).

## Patentansprüche

1. Geruchsfilter (10) für Toiletten, insbesondere für öffentliche Verkehrsmittel, mit einem zylindrischen Behälter (12), der sich in Längsrichtung entlang einer Längsachse (X) zwischen einem ersten (14) und einem zweiten (16) Sockelelement und in radialer Richtung zwischen einer durchbrochenen inneren Umfangswand (18) und einer durchbrochenen äußeren Umfangswand (20) erstreckt, wobei der zylindrische Behälter (12) mit einem Aktivmaterial gefüllt ist, wobei mindestens eines des ersten (14) und zweiten (16) Sockelelementes mindestens eine Öffnung (26) aufweist, die den Durchgang des Aktivmaterials ermöglicht, wobei der Filter (10) eine entfernbare Kappe (28) zum Verschließen der Öffnung (26) aufweist, **dadurch gekennzeichnet, dass** sich die Öffnung (26) entlang eines Kreisbogens erstreckt, der um die Längsachse (X) herum definiert ist, wobei sich diese Öffnung (26) über eine Bogenlänge erstreckt, die größer als ein Viertel des mittleren Umfangs des entsprechenden Sockelelementes (14) und kleiner als ein Drittel des mittleren Umfangs des Sockelelementes (14) ist.

2. Geruchsfilter (10) nach Anspruch 1, bei dem die entfernbare Kappe (28) eine allgemein ringförmige Form aufweist, deren radiale Abmessungen deutlich größer oder gleich denen des entsprechenden ersten (14) oder zweiten (16) Sockelelementes sind.

3. Geruchsfilter (10) nach einem beliebigen der vorhergehenden Ansprüche, bei dem jedes des ersten (14) und zweiten (16) Sockelelementes eine Öffnung (26) aufweist, die den Durchgang von Aktivmaterial ermöglicht, wobei der Filter (10) eine entfernbare Kappe (28) zum Verschließen jeder Öffnung (26) umfasst.

4. Geruchsfilter (10) nach einem der vorhergehenden Ansprüche, wobei die entfernbare Kappe (28) mit dem entsprechenden Sockelelement (14) verschraubt ist.

5. Verfahren zum Nachfüllen eines Geruchsfilters (10) nach einem beliebigen der Ansprüche 1 bis 4, **dadurch gekennzeichnet, dass** er aufweist:
- Freigeben der Öffnung (26) durch Entfernen der entfernbaren Kappe (28),
- Entleeren des Behälters (12) durch Überführen des verbrauchten Aktivmaterials durch die Öffnung (26) nach außen in Bezug auf den Behälter (12),
- Füllen des Behälters (12) durch Überführen von Aktivmaterial durch die Öffnung (26) in das Innere des Behälters (12) und
- Wiederaufsetzen der entfernbaren Kappe (28) zum Verschließen der Öffnung (26).

## Claims

1. Odour filter (10) for toilets, especially of a public transport vehicle, comprising a cylindrical container (12) which extends longitudinally along a longitudinal axis (X) between first (14) and second (16) bases and radially between a perforated inner circumferential wall (18) and a perforated outer circumferential wall (20), the cylindrical container (12) being filled with active material, wherein at least one of the first (14) and second (16) bases has at least one opening (26) allowing the passage of active material, the filter (10) comprising a removable cover (28) for closing off the opening (26), **characterised in that**, the opening (26) extending along an arc of a circle defined around the longitudinal axis (X), the opening (26) extends over an arc length which is greater than one quarter of the average circumference of the corresponding base (14) and less than one third of the average circumference of the corresponding base (14).

2. Odour filter (10) according to claim 1, wherein the removable cover (28) has a generally annular shape, the radial dimensions of which are substantially greater than or equal to those of the corresponding first (14) or second (16) base.

3. Odour filter (10) according to any one of the preceding claims, wherein each of the first (14) and second (16) bases has an opening (26) allowing the passage of active material, the filter (10) having a removable cover (28) for closing off each opening (26).

4. Odour filter (10) according to any one of the preceding claims, wherein the removable cover (28) is attached to the corresponding base (14) by screwing.

5. Method for refilling an odour filter (10) according to any one of claims 1 to 4, **characterised in that** it comprises:
- freeing the opening (26) by removing the removable cover (28),
- emptying the container (12) by passing the used active material through the opening (26) to the outside of the container (12),
- filling the container (12) by passing active material for refilling through the opening (26) to the inside of the container (12), and
- replacing the removable cover (28) in order to close off the opening (26).
